# EUROPEAN PATENT APPLICATION

(11) **EP 3 046 032 A2**
(43) Date of publication of application: **20.07.2016**
(21) Application number: 15200873.6
(22) Date of filing: 17.12.2015
(51) Int. Cl.: G06F 11/30

(54) **REMOTE MONITORING OF VEHICLE DIAGNOSTIC INFORMATION**

(30) Priority: 28.12.2014 US 201462097091 P; 14.12.2015 US 201514968080
(71) Applicant: Hand Held Products, Inc., Fort Mill, SC 29707 (US)
(72) Inventor: VALENZUELA, Luis Fernando Carrasco, Morris Plains, NJ 07950 (US)
(74) Representative: Houghton, Mark Phillip

(57) **Abstract**

A system for tracking real time data relating to the operation of a vehicle containing an on-board diagnostics port is disclosed. The system includes an interface connector complimentary to the on-board diagnostics port and being pluggable thereto, the interface connector having a processor communicatively coupled to the vehicle on-board diagnostics port to receive vehicle operational information, and one or more sensors communicatively coupled to the processor, the sensors monitoring parameters of vehicle operation. The monitored parameters and vehicle operational information are combined by the processor.

## Description

### CROSS-REFERENCE TO RELATED APPLICATION

The present application claims the benefit of U.S. Patent Application No. 62/097,091 for Remote *Monitoring of Vehicle Diagnostic Information* filed December 28, 2014. The foregoing patent application is hereby incorporated by reference in its entirety.

### FIELD OF THE INVENTION

The invention is generally related to a system of vehicle performance monitoring, and, more specifically, to a system of real time data collection for vehicle performance monitoring.

### BACKGROUND

Monitoring of vehicle performance and driving behavior is of growing interest among many companies that have large fleets of vehicles operating throughout the world. Some of these companies have thousands of vehicles operating on the road daily, and are in constant need of improving vehicle and worker efficiency. It has been found that close monitoring of personnel and their operation of company vehicles can generate significant savings in operational expenses, thereby increasing revenue for the company. To further this objective, different methodologies have been tested in order to increase control of personnel driving behavior of company owned vehicles and vehicle performance, to ultimately reduce vehicle expenditures during the vehicles' lifetime. These methods include measuring vehicle speed using global positioning systems (GPS) devices, fuel optimization controls based on MPG / distance rough calculations, proof of site attendance by scanning / collecting data on-site, schedule and route optimization using maps or mapping software, etc.

While these methods provide customers with a general idea of how their employees are doing on a daily basis, the methods often fail to provide exact details on how these individuals behave behind the wheel. Consequences of these behaviors not only impact vehicle performance, but are also reflected in safety issues for these drivers, maintenance costs, and poor vehicle performance, among other issues.

### SUMMARY

In an aspect of the invention, a system for tracking real time data relating to the operation of a vehicle containing an on-board diagnostics port, comprises an interface connector complimentary to the on-board diagnostics port and being pluggable thereto, the interface connector having a processor communicatively coupled to the vehicle on-board diagnostics port to receive vehicle operational information, and one or more sensors communicatively coupled to the processor, the sensors monitoring parameters of vehicle operation; and the monitored parameters and vehicle operational information being combined by the processor.

In an embodiment, the combined monitored parameters and vehicle operational information are transmitted from the interface connector to a remote server.

In another embodiment, the interface connector has a wireless transceiver communicatively coupled to the processor that receives and wirelessly transmits the combined monitored parameters and vehicle operational information to the remote server.

The system of claim 2, wherein the processor is communicatively coupled to a global positioning system and general packet radio service (GPS/GPRS) antenna, and the combined monitored parameters and vehicle operational information are sent by the processor to the GPS/GPRS antenna, and the GPS/GPRS antenna transmits the combined monitored parameters and vehicle operational information to the remote server.

In an embodiment, the interface connector comprises flash memory communicatively coupled to the processor, the flash memory receiving and storing the monitored parameters and vehicle operational information sent from the processor.

In an embodiment, the flash memory is localized in the interface connector.

In an embodiment, the interface connector comprises a universal serial bus port communicatively coupled to the flash memory.

In an embodiment, the flash memory is a removable memory card.

In an embodiment, the sensor is a microelectromechanical system device.

In an embodiment, the microelectromechanical system device comprises an accelerometer.

In another embodiment, the microelectromechanical system device comprises a magnetometer.

In yet another embodiment, the microelectromechanical system device comprises a gyroscope.

In an embodiment, the microelectromechanical system device comprises an accelerometer, a magnetometer, and a gyroscope.

In an embodiment, the vehicle operation information received from the in-board diagnostic port comprises a Vehicle Identification Number, engine rotations per minute, speed, fuel level, temperature, or any combination thereof.

In an embodiment, the interface connector comprises a global positioning transceiver communicatively coupled to the processor.

In another embodiment, real time global positioning data is received by the processor from the global positioning transceiver and is combined with the monitored parameters and vehicle operational information to determine driving behavior.

In an embodiment, the determined driving behaviors comprise sudden stops, rapid acceleration, aggressive driving, and impact detection.

### BRIEF DESCRIPTION OF THE DRAWINGS

The invention will now be described by way of example, with reference to the accompanying Figures, of which:
Figure 1A is a diagrammatic view of a system of real time data relating to the vehicle performance;
Figure 1B is a schematic view of the various components in a vehicle interface.
Figure 2 is a graphical representation of accelerometer data gathered and transmitted;
Figure 3A is a graphical representation of the accelerometer data overlaid with a GPS tracking map;
Figure 3B is the GPS tracking map; and
Figure 4 is a graphical representation of sample data analysis.

### DETAILED DESCRIPTION

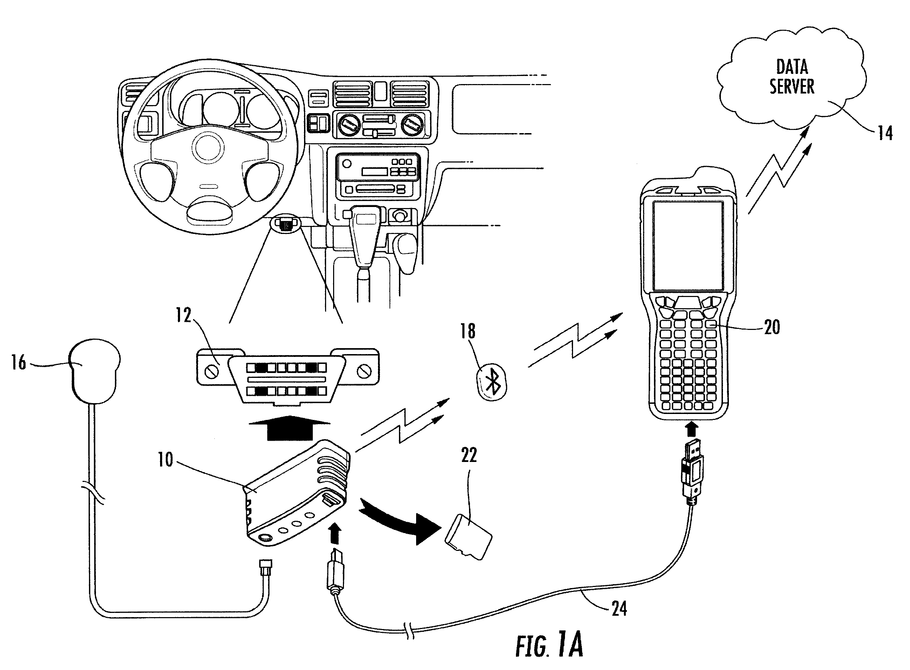

In the embodiments shown in Figures 1A-4, a system 1 of real time data relating to the performance of a vehicle, and the individuals driving the vehicle, is collected, transmitted, and analyzed. Vehicle owners can use the collected and analyzed real time data to exercise better control of their vehicle fleets and the personnel operating the vehicles.

A number of customized applications have been developed by companies for monitoring daily fleet operations. Often these applications require physical download of the data to maintain low operational costs and track these vehicles. In many cases, drivers retrieve current vehicle mileage as part of their daily process before during their shift. However, this data is only a small subset of the overall picture related to vehicle and fleet operation. For a complete picture of vehicle performance and driver actions, additional real time data from vehicles is needed in order to complement and improve operational costs of company vehicles.

Since 1996, all vehicles sold in the United States are mandated by the government to include an On-Board Diagnostics system (OBD-II) in order to help reduce emissions by monitoring the performance in all major vehicle components. An electronic control unit (ECU) interfaces with all of the vehicle systems and is in charge of getting all incoming signals from various engine sensors (i.e.: oxygen sensors) and control the actuators (i.e.: fuel injectors). This data is then used by the OBD-II system to manage vehicle performance.

Data from the OBD-II System is delivered through a standardized 16-Pin connector by using 5 different protocols supported by all major vehicle manufacturers.

As shown in an embodiment of Figure 1A, a hardware interface connector 10 is installed into fleet vehicles to collect, transmit and process operational data generated by the vehicle. In an embodiment, the interface connector 10 includes a variety of microelectromechanical system (MEMS) sensors and an OBD-II connector which is paired with the standard on-board diagnostics (OBD-II) port 12. OBD Parameter IDs or Codes from the OBD-II port 12 can be read via the interface connector 10. The data from the vehicle ECU is then matched with the data from the MEMS sensors within the interface connector 10, and either saved locally within the interface connector 10 or transmitted to a server 14 located remotely.

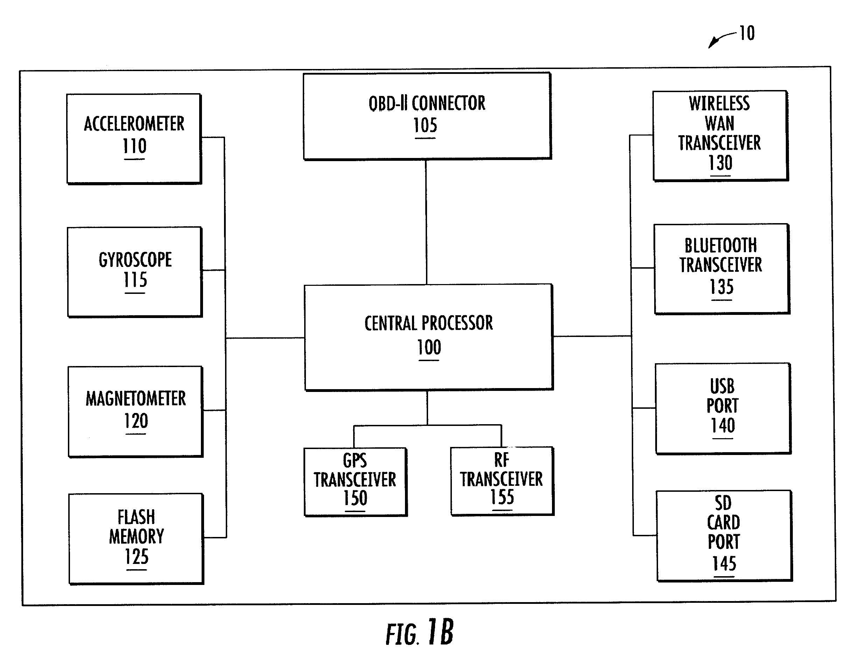

In an embodiment shown in Figure 1B, an exemplary interface connector 10 can include a central processing unit 100 communicatively coupled to an OBD-II connector 105 that is complimentary in shape with the OBD-II port 12 of the vehicle. The interface connector 10 connects to the vehicle OBD-II port 12. The interface connector 10 includes an accelerometer 110, gyroscope 115, magnetometer 120, flash memory 125, GPS transceiver 150, radio frequency (RF) transceiver 155, wireless WAN transceiver 130, Bluetooth transceiver 135, universal serial bus (USB) port 140, SD card port 145, or any combination thereof. The exemplary interface connector 10 shown in Figure 1B is not intended to limit the scope of the disclosure and those of ordinary skill in the art would appreciate that the interface connector 10 may include any variety of sensors and devices desired by the end user to customize data collection and analysis.

The interface connector 10 can be installed on vehicles and take readings directly from the OBD-II data port 12 for multiple types of data analysis. Data collection and transmission can be accomplished in a variety of ways using one or a combination of GPS/GPRS antenna connectors 16 for location and communications with the server 14, coupling via a Bluetooth enabled device 18 that transmits to the server 14, connection with a customized data transfer collection and communication device 20 or direct harvesting of data using an interface such as an SD card 22 or the like.

In an embodiment, Bluetooth 18 connects the interface connector 10 with a server 14 for data transfer and vehicle monitoring. By pairing the interface connector 10 with a mobile phone or PDT 20 using Bluetooth 18, the interface connector 10 can transmit data directly to the server 14 using a data connection provided by the PDT/mobile phone 20 through a wireless carrier service (e.g. GSM, CDMA). In an embodiment, wireless data service, such as WLAN is used to transmit data to the server 14. In another embodiment, a wireless wide area network (WWAN) is used to transmit data to the server 14, providing true mobility.

In an embodiment, a pre-installed software application tool on the PDT/mobile phone is configured to receive and analyze incoming data from the interface connector 10, and in turn, transmit the incoming data to the server 14, where the data is processed for specific tasks.

In an embodiment, the interface connector 10 communicates with the server 14 using a GPRS data connection 16, allowing for the interface connector 10 to be tracked in real time for asset management from a central office. By using a direct connection from the interface connector 10 via a GPRS data connection 16 to the server 14, vehicle and driver's performance can be monitored using an internal WWAN module to communicate with customer's MDM system through a WWAN carrier service.

In an embodiment, data can be retrieved via direct data retrieval. The interface connector 10 can include embedded flash resident memory 125 to store incoming data from the vehicle for later processing. Data also can be retrieved from the interface connector 10 through a USB Sync cord 24 (Micro-B or Mini-B plug) connected to the USB port 140, or a Micro SD memory card 22 inserted in the SD card port 145.

The OBD-II port 12 in the vehicle includes predetermined embedded codes that can be accessed by the interface connector 10 using one of the 5 standardized protocols used by the OBD-II port 12. These embedded codes can be accessed using Parameter ID requests to retrieve vehicle data like VIN (Vehicle Identification Number), engine RPM data, speed, fuel level, temperature, among others from the OBD port 12. This data is then combined in the interface connector 10 with additional MEMs sensors and GPS data to provide accurate information about performance and behavior.

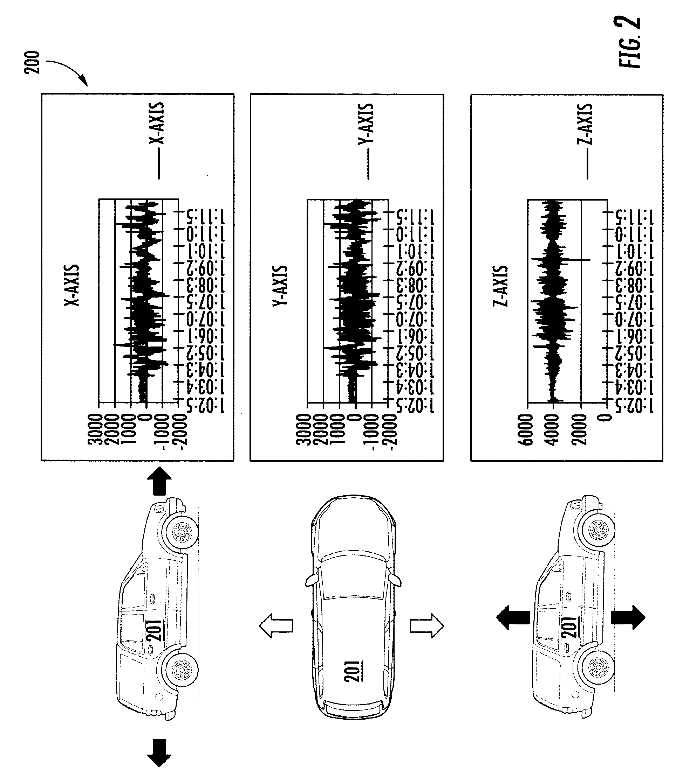

In one embodiment shown in Figure 2, data is collected by the processor 100 from an accelerometer that measures acceleration in a three dimensional form (X, Y and Z axis), by providing a two-component vector with magnitude (Acceleration or G-Force) and direction (Axis). Thus, the interface 10 can detect motion / vibrations, angle or impact.

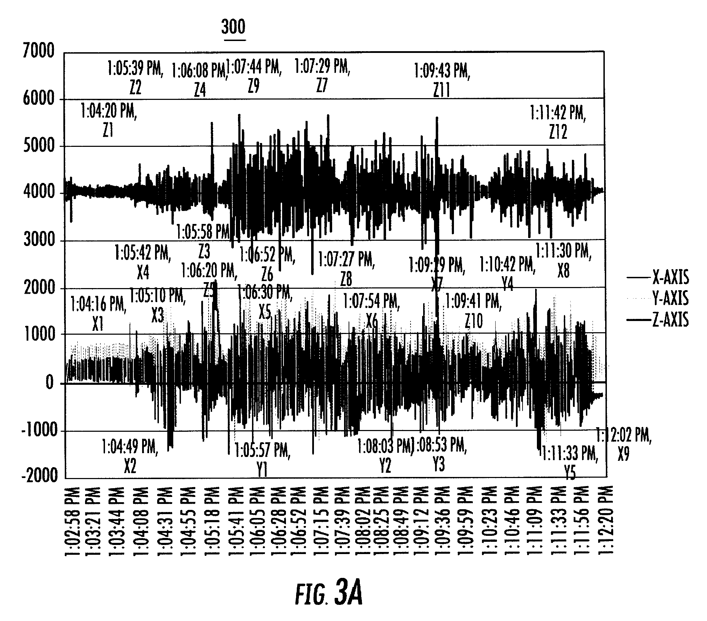

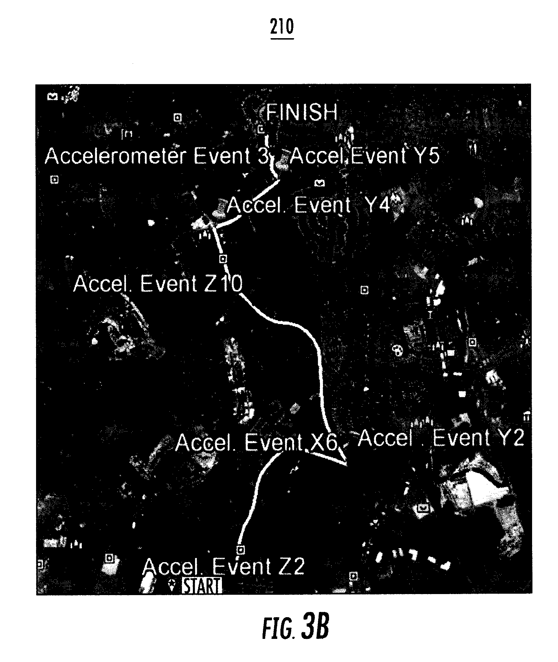

In an embodiment shown in Figure 3A, accelerometer data 200 from Figure 2 is overlaid at 300 with vehicle location using an exemplary GPS location tracking 210 of the vehicle 201 shown in Figure 3B. This allows comparison of the accelerometer data 200 to the real-time vehicle location 210 in order to provide a correlation that generates real-time information about the driving behavior.

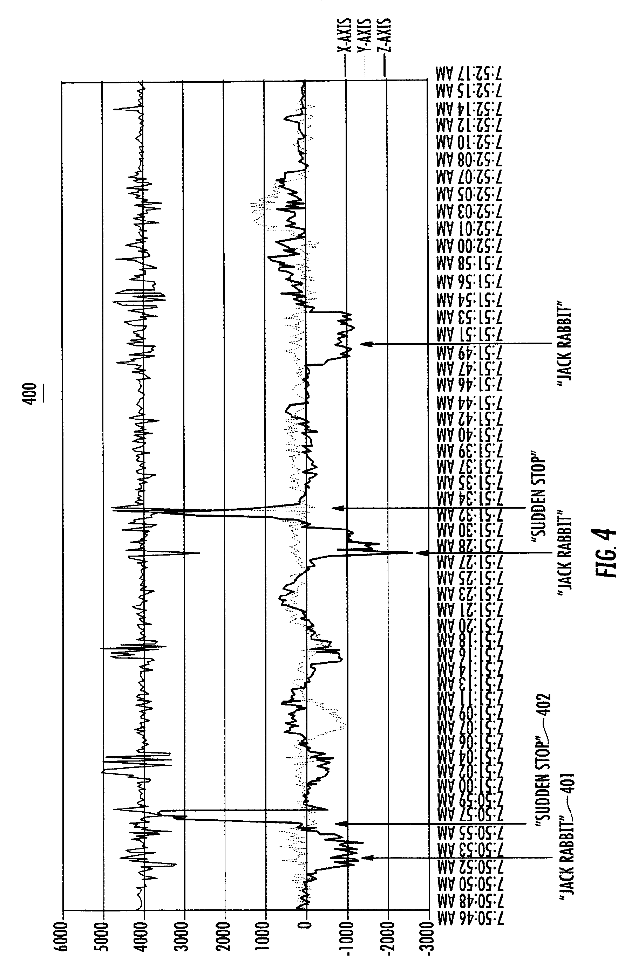

As shown in an embodiment of Figure 4, the addition of the data such as speed and RPM, obtained from the OBD port 12, an improved picture 400 with the needed information is produced to have a better view of how drivers behave while they are behind the wheel. Sudden stops, rapid acceleration, aggressive driving, impact/crash detection are only a few of the relevant behaviors that can be obtained when data from all these sensors work together. For example, at 7:50:52 AM, sudden acceleration is shown, known as a "JackRabbit" event 401; and at 7:50:55AM a "Sudden Stop" 402 is shown.

While there is shown and described herein certain specific structure embodying a hardware interface that is installed into fleet vehicles to transmit and process all of the data generated by vehicles and based in the manner in which the individuals drive them, it will be manifest to those skilled in the art that various modifications and rearrangements of the parts may be made without departing from the spirit and scope of the underlying inventive concept and that the same is not limited to the particular forms herein shown and described except insofar as indicated by the scope of the appended claims.

To supplement the present disclosure, this application incorporates entirely by reference the following patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,525;
U.S. Patent No. 8,794,526; U.S. Patent No. 8,798,367;
U.S. Patent No. 8,807,431; U.S. Patent No. 8,807,432;
U.S. Patent No. 8,820,630; U.S. Patent No. 8,822,848;
U.S. Patent No. 8,824,692; U.S. Patent No. 8,824,696;
U.S. Patent No. 8,842,849; U.S. Patent No. 8,844,822;
U.S. Patent No. 8,844,823; U.S. Patent No. 8,849,019;
U.S. Patent No. 8,851,383; U.S. Patent No. 8,854,633;
U.S. Patent No. 8,866,963; U.S. Patent No. 8,868,421;
U.S. Patent No. 8,868,519; U.S. Patent No. 8,868,802;
U.S. Patent No. 8,868,803; U.S. Patent No. 8,870,074;
U.S. Patent No. 8,879,639; U.S. Patent No. 8,880,426;
U.S. Patent No. 8,881,983; U.S. Patent No. 8,881,987;
U.S. Patent No. 8,903,172; U.S. Patent No. 8,908,995;
U.S. Patent No. 8,910,870; U.S. Patent No. 8,910,875;
U.S. Patent No. 8,914,290; U.S. Patent No. 8,914,788;
U.S. Patent No. 8,915,439; U.S. Patent No. 8,915,444;
U.S. Patent No. 8,916,789; U.S. Patent No. 8,918,250;
U.S. Patent No. 8,918,564; U.S. Patent No. 8,925,818;
U.S. Patent No. 8,939,374; U.S. Patent No. 8,942,480;
U.S. Patent No. 8,944,313; U.S. Patent No. 8,944,327;
U.S. Patent No. 8,944,332; U.S. Patent No. 8,950,678;
U.S. Patent No. 8,967,468; U.S. Patent No. 8,971,346;
U.S. Patent No. 8,976,030; U.S. Patent No. 8,976,368;
U.S. Patent No. 8,978,981; U.S. Patent No. 8,978,983;
U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;
U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902;
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;
U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;
U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a *Laser Scanning Module Employing an Elastomeric U-Hinge Based Laser Scanning Assembly,* filed February 7, 2012 (Feng *et al.*);
U.S. Patent Application No. 29/458,405 for an *Electronic Device,* filed June 19, 2013 (Fitch *et al*.);
U.S. Patent Application No. 29/459,620 for an *Electronic Device Enclosure,* filed July 2, 2013 (London *et al*.);
U.S. Patent Application No. 29/468,118 for an *Electronic Device Case,* filed September 26, 2013 (Oberpriller *et al*.);
U.S. Patent Application No. 14/150,393 for *Indicia-reader Having Unitary Construction Scanner,* filed January 8, 2014 (Colavito *et al*.);
U.S. Patent Application No. 14/200,405 for *Indicia Reader for Size-Limited Applications* filed March 7, 2014 (Feng *et al*.);
U.S. Patent Application No. 14/231,898 for *Hand-Mounted Indicia-Reading Device with Finger Motion Triggering* filed April 1, 2014 (Van Horn *et al*.);
U.S. Patent Application No. 29/486,759 for an Imaging Terminal, filed April 2, 2014 (Oberpriller et al.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley *et al*.);
U.S. PatentApplication No. 14/277,337 f*or MULTIPURPOSE OPTICAL READER, filed May 14, 2014 (Jovanovski et al*.);
U.S. Patent Application No. 14/283,282 for TERMINAL HAVING ILLUMINATION AND *FOCUS CONTROL filed May 21, 2014 (Liu et al*.);
U.S. Patent Application No. 14/327,827 for a MOBILE-PHONE ADAPTER FOR ELECTRONIC TRANSACTIONS, filed July 10, 2014 (Hejl);
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No. 14/483,056 for VARIABLE DEPTH OF FIELD BARCODE SCANNER filed Sep. 10, 2014 (McCloskey et al.);
U.S. Patent Application No. 14/513,808 for IDENTIFYING INVENTORY ITEMS IN A STORAGE FACILITY filed Oct. 14, 2014 (Singel et al.);
U.S. Patent Application No. 14/519,195 for HANDHELD DIMENSIONING SYSTEM WITH FEEDBACK filed Oct. 21, 2014 (Laffargue et al.);
U.S. Patent Application No. 14/519,179 for DIMENSIONING SYSTEM WITH MULTIPATH INTERFERENCE MITIGATION filed Oct. 21, 2014 (Thuries et al.);
U.S. Patent Application No. 14/519,211 for SYSTEM AND METHOD FOR DIMENSIONING filed Oct. 21, 2014 (Ackley et al.);
U.S. Patent Application No. 14/519,233 for HANDHELD DIMENSIONER WITH DATA-QUALITY INDICATION filed Oct. 21, 2014 (Laffargue et al.);
U.S. Patent Application No. 14/519,249 for HANDHELD DIMENSIONING SYSTEM WITH MEASUREMENT-CONFORMANCE FEEDBACK filed Oct. 21, 2014 (Ackley et al.);
U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);
U.S. Patent Application No. 14/529,563 for ADAPTABLE INTERFACE FOR A MOBILE COMPUTING DEVICE filed Oct. 31, 2014 (Schoon et al.);
U.S. Patent Application No. 14/529,857 for BARCODE READER WITH SECURITY FEATURES filed October 31, 2014 (Todeschini et al.);
U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);
U.S. Patent Application No. 14/531,154 for DIRECTING AN INSPECTOR THROUGH AN INSPECTION filed Nov. 3, 2014 (Miller et al.);
U.S. Patent Application No. 14/533,319 for BARCODE SCANNING SYSTEM USING WEARABLE DEVICE WITH EMBEDDED CAMERA filed Nov. 5, 2014 (Todeschini);
U.S. Patent Application No. 14/535,764 for CONCATENATED EXPECTED RESPONSES FOR SPEECH RECOGNITION filed Nov. 7, 2014 (Braho et al.);
U.S. Patent Application No. 14/568,305 for AUTO-CONTRAST VIEWFINDER FOR AN INDICIA READER filed Dec. 12, 2014 (Todeschini);
U.S. Patent Application No. 14/573,022 for DYNAMIC DIAGNOSTIC INDICATOR GENERATION filed Dec. 17, 2014 (Goldsmith);
U.S. Patent Application No. 14/578,627 for SAFETY SYSTEM AND METHOD filed Dec. 22, 2014 (Ackley et al.);
U.S. Patent Application No. 14/580,262 for MEDIA GATE FOR THERMAL TRANSFER PRINTERS filed Dec. 23, 2014 (Bowles);
U.S. Patent Application No. 14/590,024 for SHELVING AND PACKAGE LOCATING SYSTEMS FOR DELIVERY VEHICLES filed January 6, 2015 (Payne);
U.S. Patent Application No. 14/596,757 for SYSTEM AND METHOD FOR DETECTING BARCODE PRINTING ERRORS filed Jan. 14, 2015 (Ackley);
U.S. Patent Application No. 14/416,147 for OPTICAL READING APPARATUS HAVING VARIABLE SETTINGS filed January 21, 2015 (Chen et al.);
U.S. Patent Application No. 14/614,706 for DEVICE FOR SUPPORTING AN ELECTRONIC TOOL ON A USER'S HAND filed Feb. 5, 2015 (Oberpriller et al.);
U.S. Patent Application No. 14/614,796 for CARGO APPORTIONMENT TECHNIQUES filed Feb. 5, 2015 (Morton et al.);
U.S. Patent Application No. 29/516,892 for TABLE COMPUTER filed Feb. 6, 2015 (Bidwell et al.);
U.S. Patent Application No. 14/619,093 for METHODS FOR TRAINING A SPEECH RECOGNITION SYSTEM filed Feb. 11, 2015 (Pecorari);
U.S. Patent Application No. 14/628,708 for DEVICE, SYSTEM, AND METHOD FOR DETERMINING THE STATUS OF CHECKOUT LANES filed Feb. 23, 2015 (Todeschini);
U.S. Patent Application No. 14/630,841 for TERMINAL INCLUDING IMAGING ASSEMBLY filed Feb. 25, 2015 (Gomez et al.);
U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier);
U.S. Patent Application No. 29/519,017 for SCANNER filed March 2, 2015 (Zhou et al.);
U.S. Patent Application No. 14/405,278 for DESIGN PATTERN FOR SECURE STORE filed March 9, 2015 (Zhu et al.);
U.S. Patent Application No. 14/660,970 for DECODABLE INDICIA READING TERMINAL WITH COMBINED ILLUMINATION filed March 18, 2015 (Kearney et al.);
U.S. Patent Application No. 14/661,013 for REPROGRAMMING SYSTEM AND METHOD FOR DEVICES INCLUDING PROGRAMMING SYMBOL filed March 18, 2015 (Soule et al.);
U.S. Patent Application No. 14/662,922 for MULTIFUNCTION POINT OF SALE SYSTEM filed March 19, 2015 (Van Horn et al.);
U.S. Patent Application No. 14/663,638 for VEHICLE MOUNT COMPUTER WITH CONFIGURABLE IGNITION SWITCH BEHAVIOR filed March 20, 2015 (Davis et al.);
U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);
U.S. Patent Application No. 14/669,280 for TRANSFORMING COMPONENTS OF A WEB PAGE TO VOICE PROMPTS filed March 26, 2015 (Funyak et al.);
U.S. Patent Application No. 14/674,329 for AIMER FOR BARCODE SCANNING filed March 31, 2015 (Bidwell);
U.S. Patent Application No. 14/676,109 for INDICIA READER filed April 1, 2015 (Huck);
U.S. Patent Application No. 14/676,327 for DEVICE MANAGEMENT PROXY FOR SECURE DEVICES filed April 1, 2015 (Yeakley et al.);
U.S. Patent Application No. 14/676,898 for NAVIGATION SYSTEM CONFIGURED TO INTEGRATE MOTION SENSING DEVICE INPUTS filed April 2, 2015 (Showering);
U.S. Patent Application No. 14/679,275 for DIMENSIONING SYSTEM CALIBRATION SYSTEMS AND METHODS filed April 6, 2015 (Laffargue et al.);
U.S. Patent Application No. 29/523,098 for HANDLE FOR A TABLET COMPUTER filed April 7, 2015 (Bidwell et al.);
U.S. Patent Application No. 14/682,615 for SYSTEM AND METHOD FOR POWER MANAGEMENT OF MOBILE DEVICES filed April 9, 2015 (Murawski et al.);
U.S. Patent Application No. 14/686,822 for MULTIPLE PLATFORM SUPPORT SYSTEM AND METHOD filed April 15, 2015 (Qu et al.);
U.S. Patent Application No. 14/687,289 for SYSTEM FOR COMMUNICATION VIA A PERIPHERAL HUB filed April 15, 2015 (Kohtz et al.);
U.S. Patent Application No. 29/524,186 for SCANNER filed April 17, 2015 (Zhou et al.);
U.S. Patent Application No. 14/695,364 for MEDICATION MANAGEMENT SYSTEM filed April 24, 2015 (Sewell et al.);
U.S. Patent Application No. 14/695,923 for SECURE UNATTENDED NETWORK AUTHENTICATION filed April 24, 2015 (Kubler et al.);
U.S. Patent Application No. 29/525,068 for TABLET COMPUTER WITH REMOVABLE SCANNING DEVICE filed April 27, 2015 (Schulte et al.);
U.S. Patent Application No. 14/699,436 for SYMBOL READING SYSTEM HAVING PREDICTIVE DIAGNOSTICS filed April 29, 2015 (Nahill et al.);
U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);
U.S. Patent Application No. 14/702,979 for TRACKING BATTERY CONDITIONS filed May 4, 2015 (Young et al.);
U.S. Patent Application No. 14/704,050 for INTERMEDIATE LINEAR POSITIONING filed May 5, 2015 (Charpentier et al.);
U.S. Patent Application No. 14/705,012 for HANDS-FREE HUMAN MACHINE INTERFACE RESPONSIVE TO A DRIVER OF A VEHICLE filed May 6, 2015 (Fitch et al.);
U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);
U.S. Patent Application No. 14/707,037 for SYSTEM AND METHOD FOR DISPLAY OF INFORMATION USING A VEHICLE-MOUNT COMPUTER filed May 8, 2015 (Chamberlin);
U.S. Patent Application No. 14/707,123 for APPLICATION INDEPENDENT DEX/UCS INTERFACE filed May 8, 2015 (Pape);
U.S. Patent Application No. 14/707,492 for METHOD AND APPARATUS FOR READING OPTICAL INDICIA USING A PLURALITY OF DATA SOURCES filed May 8, 2015 (Smith et al.);
U.S. Patent Application No. 14/710,666 for PRE-PAID USAGE SYSTEM FOR ENCODED INFORMATION READING TERMINALS filed May 13, 2015 (Smith);
U.S. Patent Application No. 29/526,918 for CHARGING BASE filed May 14, 2015 (Fitch et al.);
U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.);
U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.);
U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.);and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

## Claims

1. A system for tracking real time data relating to the operation of a vehicle containing an on-board diagnostics port, comprising:
an interface connector complimentary to the on-board diagnostics port and being pluggable thereto, the interface connector having
a processor communicatively coupled to the vehicle on-board diagnostics port to receive vehicle operational information, and
one or more sensors communicatively coupled to the processor, the sensors monitoring parameters of vehicle operation; and
the monitored parameters and vehicle operational information being combined by the processor.

2. The system of claim 1, wherein the combined monitored parameters and vehicle operational information are transmitted from the interface connector to a remote server.

3. The system of claim 2, wherein the interface connector has a wireless transceiver communicatively coupled to the processor that receives and wirelessly transmits the combined monitored parameters and vehicle operational information to the remote server.

4. The system of claim 2, wherein:
the processor is communicatively coupled to a global positioning system and general packet radio service (GPS/GPRS) antenna, and
the combined monitored parameters and vehicle operational information are sent by the processor to the GPS/GPRS antenna, and the GPS/GPRS antenna transmits the combined monitored parameters and vehicle operational information to the remote server.

5. The system of claim 1, wherein the interface connector comprises flash memory communicatively coupled to the processor, the flash memory receiving and storing the monitored parameters and vehicle operational information sent from the processor.

6. The system of claim 5, wherein the flash memory is localized in the interface connector.

7. The system of claim 6, wherein the interface connector comprises a universal serial bus port communicatively coupled to the flash memory.

8. The system of claim 6, wherein the flash memory is a removable memory card.

9. The system of claim 1, wherein the sensor is a microelectromechanical system device.

10. The system of claim 9, wherein the microelectromechanical system device comprises an accelerometer.

11. The system of claim 9, wherein the microelectromechanical system device comprises a magnetometer.

12. The system of claim 9, wherein the microelectromechanical system device comprises a gyroscope.

13. The system of claim 9, wherein the microelectromechanical system device comprises an accelerometer, a magnetometer, and a gyroscope.

14. The system of claim 1, wherein the vehicle operation information received from the in-board diagnostic port comprises a Vehicle Identification Number, engine rotations per minute, speed, fuel level, temperature, or any combination thereof.

15. The system of claim 1, wherein the interface connector comprises a global positioning transceiver communicatively coupled to the processor.
